# EUROPÄISCHE PATENTSCHRIFT

(11) **EP 2 808 422 B1**
(45) Veröffentlichungstag und Bekanntmachung des Hinweises auf die Patenterteilung: **11.01.2017**
(21) Anmeldenummer: 14170375.1
(22) Anmeldetag: 28.05.2014
(51) Int. Cl.: C23C 18/12, C09D 1/00, C09D 1/02, B64G 1/22, C04B 28/26, C04B 28/34, C04B 111/00, B64G 1/50, B64G 1/54

(54) **ELEKTRISCH LEITENDE SCHUTZBESCHICHTUNG FÜR BAUTEILE AUS DER LUFT- UND RAUMFAHRTTECHNIK UND IHRE HERSTELLUNG**
ELECTRICALLY CONDUCTIVE PROTECTIVE COATING AEROSPACE COMPONENTS AND THEIR PREPARATION
REVÊTEMENT DE PROTECTION CONDUCTEUR D'ÉLECTRICITÉ POUR COMPOSANTS ISSUS DE LA TECHNIQUE AÉROSPATIALE ET AÉRONAUTIQUE

(30) Priorität: 29.05.2013 DE 102013210115
(43) Veröffentlichungstag der Anmeldung: 03.12.2014
(73) Patentinhaber: CeraNovis GmbH, 66117 Saarbrücken (DE)
(72) Erfinder: Meyer, Frank, Dr., 66386 St. Ingbert (DE); Faber, Stefan, Dr., 66133 Saarbrücken (DE)
(74) Vertreter: Patentanwaltskanzlei Cartagena

(56) Entgegenhaltungen:
- WO-A1-2012/107269
- US-A- 4 111 851
- US-A1- 2009 196 986
- Gabriela B. González: "Investigating the Defect Structures in Transparent Conducting Oxides Using X-ray and Neutron Scattering Techniques", Materials, vol. 5, no. 12, 11 May 2012 (2012-05-11), pages 818-850, XP055279786, DOI: 10.3390/ma5050818

## Beschreibung

Die vorliegende Erfindung betrifft ein Verfahren zum Schützen eines Substrats vor Beschädigung durch elektrische Aufladung, elektromagnetische Strahlung und/ oder Partikelbeschuss, insbesondere eines Bauteils aus der Luft- und Raumfahrttechnik, eine Schicht oder Beschichtung, hergestellt oder herstellbar nach diesem Verfahren sowie Substrate, welche eine solche Schicht oder Beschichtung aufweisen.

Raumflugkörper wie Satelliten oder Sonden sind im Weltraum, insbesondere in Sonnennähe, extremen Bedingungen ausgesetzt. Sie unterliegen einer langfristigen Exposition gegebenenfalls sehr harter elektromagnetischer Strahlung und Teilchenstrahlung und darüber hinaus auch extremen Temperaturschwankungen. So ist es möglich, dass die Oberflächen der Flugkörper innerhalb von wenigen Minuten einen Temperaturbereich von -200 °C bis +500 °C durchlaufen, abhängig davon, ob sie der Sonne zu- oder abgewandt sind. Aufgrund der hohen Temperaturen in Sonnennähe können insbesondere die Außenteile der Raumkörper nur aus speziellen Materialien wie hochtemperaturfesten Aluminium- und Titanlegierungen sowie Kompositwerkstoffen gefertigt werden. Darüber hinaus machen die extremen Bedingungen eine temperaturregulierende Beschichtung der Bauteile unverzichtbar.

Um die Energiemenge, welche bei Bestrahlung von einem Substrat absorbiert wird, zu kontrollieren, gibt es prinzipiell zwei Möglichkeiten: Konventionelle Isolationsmaterialien und speziell angefertigte Oberflächenbeschichtungen mit besonderen optischen Eigenschaften. Konventionelle Isolationsmaterialien mit einer niedrigen Wärmeleitfähigkeit sind meistens voluminös und/oder schwer. Da das Bestreben nach einer Gewichts- und Platzreduzierung bei jeder Anwendung im Bereich der Luft- und Raumfahrttechnik im Vordergrund steht, haben diese Materialien auf diesem Gebiet nur einen begrenzten Nutzen. Dagegen können durch die speziell angefertigten Oberflächenbeschichtungen sowohl die Wärmeabsorption reduziert, als auch die Gesamtmenge an zugeführtem Gewicht bzw. Volumen auf ein Minimum begrenzt werden.

Die Wärmemenge, die von einer solchen Beschichtung bzw. dem damit geschützten Substrat aufgenommen wird, hängt im Wesentlichen von drei oberflächenoptischen Eigenschaften ab: Reflexion, solare Absorption und Emissionsvermögen. Bei Reflexion wird die Strahlungsenergie abgeleitet, eine Temperaturerhöhung bleibt aus. Kommt es zu einer Absorption, muss die aufgenommene Energie wieder emittiert werden, um eine Aufheizung der Oberfläche zu vermeiden. Hierzu zeichnen sich Bauteile im Bereich der Luft- und Raumfahrttechnik idealerweise durch eine weiße Oberfläche mit einem geringen Absorptionskoeffizienten und einem hohen Emissionsvermögen aus.

Ein weiteres Problem stellt die elektrostatische Aufladung solcher Beschichtungen dar, wie sie beispielsweise beim Durchqueren des Van-Allen Belts auftreten können.

Aus dem Stand der Technik sind elektrisch nicht leitfähige weiße Oberflächenbeschichtungen für geostationäre Anwendungen bekannt, die auf silikonbasierten, weiß pigmentierten Hochtemperaturfarben basieren. Diese Farben weisen jedoch einen sehr hohen organischen Kohlenstoffanteil auf, der meist auf organische Bindersysteme und Additive bzw. Hybridmaterialen wie beispielsweise Polysiloxan zurückzuführen ist. Bei hohen Temperaturen im Vakuum, insbesondere in Kombination mit extremer UV-Strahlung, kann eine Verkohlung eintreten, resultierend in einer Schwarzfärbung der Oberflächenbeschichtung. Dies kann zu einer Erwärmung des Bauteils und in extremen Fällen zu einer Materialermüdung führen.

Bekannt sind außerdem mittels PVD (physical vapour deposition) oder CVD (chemical vapour deposition) aufgedampfte Beschichtungen, bestehend aus verschiedenen transparenten oder weißen Oxiden. Eine so aufgebrachte Schicht ist aufgrund des großen apparativen Aufwands aber sehr teuer und dreidimensionale Bauteile mit komplexer Geometrie lassen sich nur eingeschränkt beschichten.

Die US 5885658 A offenbart ein Verfahren, gemäß dem Aluminiumbauteile für Raumflugkörper mit einer wasserglasbasierten, weiß pigmentierten, temperaturregulierenden Schicht versehen werden. Um den extremen Bedingungen im Weltraum Stand zu halten, wird diese Schicht mit einer transparenten, fluoropolymerbasierten Schutzschicht überzogen. Diese Schutzschicht zeigt zwar eine erhöhte Beständigkeit gegenüber UV-Strahlung, allerdings kann es oberhalb von 300 °C zu einer Zersetzung des Fluoropolymers kommen. In Sonnennähe sowie bei Atmosphärenein- und austritten würde die Schicht folglich Schaden nehmen. Für Langzeitmissionen, die eine Bauteilwartung nicht vorsehen, ist eine solche Schicht ungeeignet. Darüber hinaus zeigen diese wasserglasbasierten Systeme meist nur eine geringe Temperaturwechselbeständigkeit, was das Einsatzgebiet dieser Systeme weiter einschränkt.

Aus der WO 2012/107269 A1 ist ein Verfahren zum Schützen eines Substrats vor Beschädigung durch elektro-magnetische Strahlung und/oder Partikelbeschuss, bei dem eine Zusammensetzung umfassend Partikel mit Schichtgitterstruktur, insbesondere hexagonales Bornnitrid, anorganische Partikel, die weiß oder transparent sind sowie einen anorganischen Binder als Schicht auf das Substrat aufgebracht und getrocknet wird. Die Schicht kann geringe Anteile an Indiumzinnoxid (ITO) und Antimonzinnoxid (ATO) umfassen.

Die im oben erwähnten Stand der Technik beschriebenen Schichten sind aus elektrischer Sicht alle Isolatoren. Dies kann allerdings insofern von Nachteil sein, als sich auf der Schicht bildende statische Aufladungen nicht abfließen können und gegebenenfalls an Raumflugkörpern befestigte Messinstrumente beschädigt werden können, wenn eine zu starke Aufladung bzw. ein zu geringer Ladungsabfluss auftritt.

Aus der US 4111851 A ist eine Beschichtung bekannt, die sich durch ihre elektrische Leitfähigkeit auszeichnet. Diese besteht unter anderem aus Zinkoxid, das zur Erhöhung der elektrischen Leitfähigkeit in Kontakt mit Luft auf Temperaturen oberhalb 1000 °C erhitzt wurde.

Aus der US 2009/0196986 A1 ist eine Beschichtung bekannt, die Gallium-Magnesium-Oxid enthalten kann. Zur Herstellung des Gallium-Magnesium-Oxids werdenGalliumoxid und Magnesiumoxid intensiv gemischt und erhitzt, gegebenenfalls auch unter einer wasserstoffhaltigen Atmosphäre.

Der vorliegenden Erfindung lag die Aufgabe zugrunde, eine technische Lösung zum Schützen von Substraten wie Raumflugkörpern und deren Bauteilen vor den genannten Belastungen bereitzustellen, welche die aus dem Stand der Technik bekannten Nachteile nicht aufweist. Insbesondere sollen die Schichten elektrisch leitfähig sein, also einen geringen Bulkwiderstand aufweisen. Geschützt werden sollen insbesondere Bauteile aus Metall (Titan, Aluminium) sowie aus faserverstärkten Kompositwerkstoffen (Kohlefaser), die im Bereich der Luft- und Raumfahrttechnik Verwendung finden. Die geschützten Bauteile sollen sich insbesondere für Raumflugkörper eignen, die für sonnennahe Tiefraummissionen vorgesehen sind.

Diese Aufgabe wird gelöst durch das Verfahren mit den Merkmalen des unabhängigen Anspruchs 1 und die Schicht oder Beschichtung mit den Merkmalen des unabhängigen Anspruchs 6. Bevorzugte Ausführungsformen des erfindungsgemäßen Verfahrens sind in den abhängigen Ansprüchen 2 bis 5 genannt. Bevorzugte Ausführungsformen der erfindungsgemäßen Schicht oder Beschichtung sind in den abhängigen Ansprüchen 6 bis 9 angegeben. Daneben sind auch Substrate mit den Merkmalen des Anspruchs 10 Gegenstand der vorliegenden Erfindung.

Das erfindungsgemäße Verfahren dient zum Schützen eines Substrats vor Beschädigung durch elektromagnetische Strahlung und/oder Partikelbeschuss, also vor Bedingungen, wie sie insbesondere im Weltraum auftreten. Insbesondere schützt es das Substrat auch vor den möglichen negativen Folgen statischer Aufladungen, da es elektrisch leitend ausgebildet ist. Es zeichnet sich dadurch aus, dass auf das Substrat eine Zusammensetzung umfassend Partikel mit Schichtgitterstruktur (Komponente 1), insbesondere hexagonales Bornitrid, anorganische Partikel, die transparent oder weiß sind (Komponente 2), sowie einen Glasbildner als anorganischen Binder (Komponente 3) als Schicht aufgebracht und getrocknet wird. Die anorganischen Partikel bestehen dabei zu einem Teil (Komponente 2a) aus Partikeln aus einem transparenten oder weißen, elektrisch leitfähigen Oxid (TCO) und zum anderen Teil (Komponente 2b) aus mindestens einem transparenten oder weißen, elektrisch nicht leitfähigen Oxid. Die Zusammensetzung umfasst also mindestens vier Komponenten, die sich stofflich voneinander unterscheiden.

Als Partikel mit Schichtgitterstruktur kommen neben Bornitridpartikeln insbesondere auch Partikel aus einem Schichtsilikat, insbesondere einem Schichtsilikat aus der Gruppe mit Glimmer, Vermiculit und Montmorillonit, in Frage. Zum Einsatz kommen können die genannten Schichtsilikate oder Mischungen aus den genannten Schichtsilikaten sowohl an Stelle des hexagonalen Bornitrids als auch in Kombination mit diesem. Unter einer Schichtgitterstruktur soll vorliegend verstanden werden, dass auf molekularer Ebene parallel zueinander verlaufende Schichten bestehen, wobei es bevorzugt ist, dass die Bindung zwischen benachbarten Atomen in einer Schicht im Mittel größer ist als zu benachbarten Atomen in einer parallelen Schicht.

Als anorganische transparente oder weiße Partikel werden vorliegend insbesondere Partikel bezeichnet, welche im sichtbaren Bereich des elektromagnetischen Spektrums eine weiße Farbe bzw. eine Transparenz zeigen. Insbesondere dienen sie der Erzeugung von optischer Weiße in der Schicht. Bevorzugt weisen die anorganischen Partikel eine Mohs'sche Härte von mindestens 6 und/oder einen Brechungsindex von n ≥ 1,6 auf auf.

Die anorganischen transparenten oder weißen Partikel sind verschieden von den Partikeln mit der Schichtgitterstruktur, auch wenn letztere, beispielsweise im Fall von Glimmer, durchaus selbst bevorzugt transparent oder weiß sind.

Bevorzugt handelt es sich bei den anorganischen Partikeln aus dem elektrisch nicht leitenden Oxid um mindestens ein Mitglied aus der Gruppe mit Aluminiumtitanatpartikeln, Zirkoniumdioxidpartikeln und Aluminiumoxidpartikeln, letzteres insbesondere in seiner Modifikation Korund. Als transparente Partikel kommen beispielsweise Partikel aus hochschmelzendem Glas, bevorzugt mit einem Schmelzpunkt > 600 °C, insbesondere > 800 °C, in Frage.

Bei den anorganischen Partikeln aus dem elektrisch leitfähigen Oxid handelt es sich um mindestens ein Mitglied aus der Gruppe mit Indiumzinnoxid (ITO), Aluminium-Zink-Oxid (AZO), und Antimon-Zinn-Oxid (ATO). In besonders bevorzugten Ausführungsformen kommen Trägerpartikel aus Titanoxid (TiO₂), Siliziumdioxid (SiO₂), Aluminiumoxid oder einer ähnlichen Verbindung, die mit mindestens einem der genannten TCOs beschichtet sind, insbesondere hüllenartig umschlossen werden, zum Einsatz.

Die anorganischen Partikeln aus dem elektrisch leitfähigen Oxid werden zwecks Verbesserung ihrer Leitfähigkeit einer aktivierenden Vorbehandlung unterzogen. Diese umfasst die folgenden Maßnahmen:
- Mahlen der Partikel zur Verringerung der Korngröße,
- Tempern der Partikel an Luft zur Entfernung von eventuellen kohlenstoffhaltigen Verunreinigungen, und
- Tempern im Vakuum oder unter Wasserstoff und/oder unter Formiergas (einem leicht reduzierend wirkenden Gasgemisch aus Stickstoff und Wasserstoff) zur Erzeugung von Sauerstofffehlstellen.

Bei dem zu schützenden Substrat handelt es sich meist um ein metallisches Substrat. Bevorzugt werden mit dem erfindungsgemäßen Verfahren Substrate beschichtet, die für Bauteile im Bereich der Luft- und Raumfahrttechnik eingesetzt werden. Insbesondere handelt es sich dabei um Substrate aus Aluminium oder einer hochtemperaturfesten Aluminiumlegierung (z.B. Alloy 6082, Dispal®), Titan oder einer hochtemperaturfesten Titanlegierung (z.B. TiAl6V4) oder aus einem faserverstärkten Werkstoff (z.B. einem Kohlefaserverbundwerkstoff oder Glasfaserverbundwerkstoff). In Frage kommen des Weiteren insbesondere auch Substrate aus Stahl, aus einem Glas, aus Quarz oder aus einer Keramik.

Besonders bevorzugt handelt es sich bei der verwendeten Zusammensetzung um eine Suspension, die neben den erwähnten Partikeln und dem Binder ein Lösungs- bzw. Dispergiermittel enthält. Der Feststoffanteil der Suspension beträgt in der Regel zwischen 25 und 60 Gew.-%, bevorzugt zwischen 35 und 45 Gew.-%. Bevorzugt wird ein polares Lösungs- bzw. Dispergiermittel verwendet, insbesondere Wasser.

Das Aufbringen der Zusammensetzung auf das Substrat kann mittels üblicher Verfahren wie Sprühen, Tauchen, Fluten etc. erfolgen. Bevorzugt ist der Auftrag durch Sprühen, insbesondere durch Niederdrucksprühen. Durch Einstellen der Viskosität der Zusammensetzung, sowie der Sprühparameter (Druck, Materialfluss und Abstand zum Substrat) lassen sich definierte Schichtdicken realisieren.

In einer bevorzugten Ausführung des erfindungsgemäßen Verfahrens wird auf die zu schützenden Substrate vor dem Aufbringen der Zusammensetzung ein Haftvermittler aufgebracht. Dieser sollte möglichst dünn mit einer Schichtdicke zwischen 0,1 µm und 5 µm, bevorzugt zwischen 0,1 µm und 3 µm, insbesondere zwischen 0,1 µm und 1 µm, aufgebracht werden. Bevorzugt handelt es sich dabei aus stofflicher Sicht um den gleichen anorganischen Binder, der auch in der Zusammensetzung enthalten ist und auf den im Folgenden noch näher eingegangen wird.

Vorzugsweise wird die Substratoberfläche vor dem Aufbringen der Zusammensetzung bzw. gegebenenfalls des Haftvermittlers mechanisch, beispielsweise durch einen Strahlprozess unter Verwendung von Glasgranulat oder Korund, aufgeraut oder anderweitig chemisch oder physikalisch behandelt, um eine verbesserte Haftung zu erzielen. Alternativen zur mechanischen Aufrauhung sind beispielsweise Ätzen, Bedampfen, Erodieren oder eine Plasma-Vorbehandlung. Daneben werden gegebenenfalls die zu beschichtenden Substrate zur Entfernung von Schmutz- und Fettresten durch Eintauchen der Substrate in Reinigungsbäder, beispielsweise gefüllt mit einer üblichen Detergenzlösung, gereinigt. Gegebenenfalls kann dieser Prozess durch Applikation von Ultraschall unterstützt werden.

Die Zusammensetzung und/oder der Haftvermittler können in einem oder in mehreren Arbeitsgängen auf das Substrat aufgebracht werden, insbesondere der aufeinanderfolgende Auftrag von drei bis vier Schichten aus der Zusammensetzung kann bevorzugt sein, wobei die Schichtdicke jeder der Schichten bevorzugt zwischen 2 µm und 10 µm, insbesondere etwa 5 µm, beträgt. Zwischen den einzelnen Arbeitsgängen können Trocknungsschritte vorgesehen sein, sowohl zwischen dem Aufbringen des Haftvermittlers und der Zusammensetzung als auch zwischen dem aufeinanderfolgenden Auftrag von zwei Schichten aus der Zusammensetzung. In beiden Fällen kann allerdings auch ein Nass-auf-Nass-Auftrag bevorzugt sein.

Nach dem Aufbringen der Zusammensetzung wird diese getrocknet. Dazu kann man die beschichteten Substrate im einfachsten Fall einfach bei Raumtemperatur ruhen lassen. Die Trocknung kann in bevorzugten Ausführungsformen aber auch im Rahmen einer Wärmebehandlung erfolgen, bei der das beschichtete Bauteil Temperaturen insbesondere zwischen 50 °C und 600 °C, bevorzugt zwischen 100 °C und 500 °C, ausgesetzt wird, beispielsweise in einem Sinterofen. Die Behandlung kann an Luft, im Vakuum, unter Wasserstoff, unter Formiergas oder unter einer Schutzgasatmosphäre vorgenommen werden. Gegebenenfalls kann auch zunächst sauerstofffrei gearbeitet werden und am Ende der Behandlung eine Sauerstoffexposition erfolgen. Dies ist aber nicht zwingend erforderlich. Alternativ kann sich die Wärmebehandlung natürlich auch als separater Schritt an die Trocknung anschließen. Zur Trocknung kann das mit der Zusammensetzung beschichtete Substrat ebenfalls erwärmt werden, beispielsweise auf eine Temperatur zwischen 30 °C und 120 °C, insbesondere in einem Umlufttrockenschrank oder durch IR-Strahlung.

Der im Rahmen des erfindungsgemäßen Verfahrens als Binder verwendete Glasbildner ist bevorzugt bei Raumtemperatur in Wasser prozessierbar. In Wasser prozessierbare Glasbildner sind dem Fachmann grundsätzlich bekannt. Sie sind in der Regel bei Raumtemperatur mindestens teilweise in Wasser löslich und vermögen nach Entfernung des Wassers und Erwärmung, gegebenenfalls Aufschmelzen, eine glasartige Matrix auszubilden, die beispielsweise auf den Grundbauelementen [-PO₄]- und/oder [-SiO₄]- basieren kann.

Bevorzugt umfasst der Binder ein Wasserglas oder ein Phosphatglas, besonders bevorzugt handelt es sich bei dem Binder um eine dieser Komponenten. Unter dem Begriff Wasserglas versteht der Fachmann bekanntlich wasserlösliche, aus dem Schmelzfluss erstarrte Alkalisilikate, insbesondere Lithium, Kalium- und Natriumsilikate, bzw. deren (viskose) wässrige Lösungen. Auf die entsprechenden Definitionen in den einschlägigen Lehrbüchern kann hier verwiesen werden. Die Wassergläser werden üblicherweise auch durch das Massen- oder Molverhältnis SiO₂/Alkalioxid sowie durch die Dichte der wässrigen Lösungen charakterisiert. Die Dichteangaben erfolgen dabei teilweise noch in Baume-Graden, einer Aräometer-Dichteskala, die ursprünglich mit einer 10%igen Kochsalzlösung geeicht wurde. Das Verhältnis von Alkalioxid zu SiO₂ in einem Wasserglas wird oft auch als sogenanntes Modul bezeichnet.

Vorliegend wird als Wasserglas bevorzugt ein Kaliumwasserglas, also ein wässriges oder wasserlösliches Kaliumsilikat, verwendet. Auch der Einsatz von Lithium- und Natriumwassergläsern kann unter bestimmten Bedingungen jedoch bevorzugt sein. Vorzugsweise liegt das verwendete Wasserglas in Form seiner wässrigen Lösung vor. Insbesondere können auch Mischungen verschiedener Wassergläser verwendet werden. Das Modul bevorzugt verwendeter Wassergläser liegt zwischen 2 und 4, insbesondere 2,5.

Insbesondere wenn ein Kaliumwasserglas verwendet wird, kann es bevorzugt sein, die oben beschriebene Trocknung in einer kohlendioxidhaltigen Atmosphäre durchzuführen. Es bildet sich dann üblicherweise während des Trocknungsprozesses Kaliumcarbonat.

Phosphatgläser weisen als Grundbauelement [PO₄]-Tetraeder auf. Sie werden in der Regel hergestellt, indem man oxidische Verbindungen in eine Schmelze aus Phosphorpentoxid einbringt. Phosphatgläser sind häufig stark hygroskopisch und lösen sich häufig zumindest teilweise in Wasser.

In bevorzugten Ausführungsformen können bei den Phosphatgläsern auch ein Teil der [PO₄]-Tetraeder durch [SiO₄]-Einheiten ersetzt sein. Im Rahmen der vorliegenden Erfindung bevorzugt einsetzbare Phosphatglasbinder bestehen formal im Wesentlichen aus SiO₂, P₂O₅, Al₂O₃ sowie einem Anteil an Alkali- und/oder Erdalkalimetallen und weisen in besonders bevorzugt Ausführungsformen Spuren von ZnO und Fe₂O₃ auf. Des Weiteren erweichen im Rahmen der vorliegenden Erfindung bevorzugt einsetzbare Phosphatgläser bei Temperaturen zwischen 450 °C und 550 °C, insbesondere bei etwa 500 °C, und beginnen bei Temperaturen oberhalb von etwa 600 °C zu sintern.

Eine Zusammensetzung umfassend die genannten Partikel sowie das beschriebene Phosphatglas als anorganischen Binder, aus der sich gemäß dem vorliegend beschriebenen Verfahren Schichten oder Beschichtungen herstellen lassen, die zum Schutz eines bevorzugt metallischen Substrats vor Beschädigung durch elektromagnetische Strahlung und/oder Partikelbeschuss dienen, ist ebenfalls Gegenstand der vorliegenden Erfindung.

Die Verwendung von Wassergläsern und Phosphatgläsern als Binder bringt besondere Vorteile mit sich. Bei fehlerhaftem Auftrag der Zusammensetzung auf das Bauteil besteht die Möglichkeit, die Zusammensetzung nach dem Trocknungsschritt durch Einwirkung von Wasser oder einer alkalischen Reinigungslösung, also ohne zerstörende, abrasive Reinigungsschritte, restlos abzuwaschen und damit das fehlbeschichtete Substrat zu "recyceln". Nach der beschriebenen Wärmebehandlung ist dies bei Verwendung von Wassergläsern in der Regel allerdings nicht mehr möglich.

Ziel der Trocknung ist es insbesondere, in der Zusammensetzung enthaltenes Lösungs- bzw. Dispergiermittel möglichst vollständig zu entfernen. Hingegen hat die Wärmebehandlung das Ziel, eine strukturelle Aushärtung der Schicht auf dem Substrat herbeizuführen, gegebenenfalls auch unter Umsetzung der in der Zusammensetzung enthaltenen Komponenten zu einer neuen chemischen Verbindung. So können z.B. die beschriebenen Wassergläser durch Kondensationsreaktionen bei der Wärmebehandlung abbinden und eine feste, glasartige Matrix ausbilden, in welche die übrigen Komponenten der Zusammensetzung eingelagert sind. Weiterhin lässt sich durch die Art und die Konzentration der verwendeten Wassergläser auch die Porosität der entstehenden Beschichtung einstellen.

Die Zusammensetzung, welche gemäß dem erfindungsgemäßen Verfahren auf das Substrat aufgebracht wird, enthält die folgenden Bestandteile in den folgenden Anteilen:
(1) Den anorganischen Binder in einem Anteil zwischen 5 Gew.-% und 45 Gew.-%, bevorzugt zwischen 15 Gew.-% und 35 Gew.-%
(2) Die anorganischen Partikel aus dem transparenten oder weißen, elektrisch nicht leitfähigen Oxid in einem Anteil zwischen 10 Gew.-% und 60 Gew.-%, bevorzugt zwischen 30 Gew.-% und 45 Gew.-%
(3) Die anorganischen Partikel aus dem transparenten oder weißen, elektrisch leitfähigen Oxid (TCO) in einem Anteil zwischen 10 Gew.-% und 90 Gew.-%, bevorzugt zwischen 10 Gew.-% und 70 Gew.-%
(4) Die Partikel mit der Schichtgitterstruktur, insbesondere das hexagonale Bornitrid, in einem Anteil zwischen 1 Gew.-% und 10 Gew.-%, bevorzugt zwischen 4 Gew.-% und 7 Gew.-%

Zu beachten ist hierbei, dass sich die genannten Prozentangaben ausschließlich auf den Feststoffanteil der Zusammensetzung beziehen, den Anteil an Lösungs- und/oder Dispergiermittel also nicht berücksichtigen, und sich dabei zu 100 Gew.-% ergänzen. Es ist weiterhin zu beachten, dass der anorganische Binder selbst einen Anteil an einem Lösungsmittel enthalten kann, z.B. Wasser bei Verwendung eines Wasserglases als Binder. Dieser Anteil ist von den Prozentangaben erfasst.

Mit der beschriebenen Zusammensetzung lassen sich Schichten oder Beschichtungen herstellen, deren spezifischer Flächenwiderstand im Bereich zwischen 1 Ohm und 100 GigaOhm (entspricht einem Bulkwiderstand < 10⁸ Ohm-m) liegt.

Zusätzlich kann zur Einstellung des Flächenwiderstands eine Strukturierung der aufgebrachten Schicht erfolgen. Hierunter soll verstanden werden, dass die aufgebrachte Schicht punktuell und/oder entlang von einer oder mehreren durchgängigen Linien geschwächt wird, indem die Schicht in diesen Punkten und/oder Linien zumindest teilweise abgetragen wird, idealerweise sogar so weit, dass die Substratoberfläche in den Punkten und/oder Linien vollständig frei liegt. Dies dient dazu, die Leitfähigkeit der Beschichtung auf dem Substrat einzustellen, so dass auf seiner Oberfläche entstehende elektrostatische Aufladungen besser abgeleitet werden können. Die Strukturierung erfolgt dabei bevorzugt derart, dass bei der Abtragung zwischen 0,005 % und 1,5 %, insbesondere zwischen 0,01 % und 1 %, der mit der Zusammensetzung bedeckten Substratfläche freigelegt werden.

Die Strukturierung kann sich an die beschriebene Wärmebehandlung anschließen, es kann aber auch bevorzugt sein, diesen Zusatzschritt zwischen Trocknung und Wärmebehandlung durchzuführen. Die Strukturierung der Schicht erfolgt bevorzugt auf mechanischem Weg. So können die Linien und/oder Punkte beispielsweise gebildet werden, indem die aufgebrachte Schicht gemäß einem vorgegebenen Muster mit Hilfe eines Werkzeugs wie einer dünnen Nadel, bevorzugt aus Titan oder Stahl, zumindest teilweise entfernt wird. Es ist jedoch auch der Einsatz eine Lasers (Laserablation) denkbar.

Eine erfindungsgemäße Schicht oder Beschichtung zeichnet sich dadurch aus, dass sie eine glasartige Matrix aufweist, in welche die Partikel mit der Schichtgitterstruktur, insbesondere das hexagonale Bornitrid, sowie die anorganischen (elektrisch leitenden und nicht leitenden) Partikel eingelagert sind. Angeordnet ist sie auf einem Substrat, insbesondere auf der Oberfläche eines Substrats aus Aluminium oder einer hochtemperaturfesten Aluminiumlegierung, Titan oder einer hochtemperaturfesten Titanlegierung oder aus einem faserverstärkten Werkstoff wie z.B. einem Kompositwerkstoff aus Kohlenstofffasern und Siliziumcarbid. Herstellen lässt sich die erfindungsgemäße Schicht insbesondere gemäß dem beschriebenen erfindungsgemäßen Verfahren. Die glasartige Matrix wird dabei aus dem beschriebenen anorganischen Binder gebildet. Entsprechend kann im Hinblick auf bevorzugte Ausführungsformen der anorganischen Partikel und sonstiger gegebenenfalls in der Matrix enthaltener Bestandteile auf die entsprechenden obigen Ausführungen Bezug genommen und verwiesen werden.

Bevorzugt handelt es sich bei der Matrix um eine silikatische Matrix mit [SiO₄]-Grundeinheiten oder eine Matrix basierend auf Phosphatglas mit [PO₄]-Grundeinheiten, die aus dem oben beschriebenen Wasser- oder Phosphatglas resultiert.

In der Schicht sind die Partikel mit Schichtgitterstruktur in einem Anteil zwischen 5 und 20 Gew.-%, bevorzugt zwischen 8 und 15 Gew.-%, enthalten.

Die anorganischen Partikel aus dem transparenten oder weißen, elektrisch leitfähigen Oxid (das TCO) sind in der Schicht in einem Anteil zwischen 10 und 90 Gew.-%, bevorzugt zwischen 20 und 60 Gew.-%, insbesondere von ca. 30 Gew.-%, enthalten.

Die anorganischen Partikel aus dem transparenten oder weißen, elektrisch nicht leitfähigen Oxid sind in der Schicht in einem Anteil zwischen 10 und 60 Gew.-%, bevorzugt zwischen 20 und 40 Gew.-%, insbesondere von ca. 30 Gew.-%, enthalten.

Der anorganische Binder (entspricht dem Gewichtsanteil der Matrix in der Schicht) ist in der Schicht in einem Anteil zwischen 5 und 25 Gew.-%, bevorzugt zwischen 10 und 20 Gew.-%, insbesondere von ca. 15 Gew.-%, enthalten.

Die Prozentangaben beziehen sich hierbei auf die Gesamtmasse der Schicht oder Beschichtung, insbesondere nach der Trocknung und der Wärmebehandlung gemäß einem erfindungsgemäßen Verfahren.

Die anorganischen Partikel (sowohl die elektrisch leitenden als auch die nicht leitenden) sowie die Partikel mit der Schichtgitterstruktur, insbesondere das hexagonale Bornitrid, liegen in der Matrix bevorzugt partikulär mit einer bevorzugten mittleren Teilchengröße zwischen 0,1 µm und 6 µm vor. In Weiterbildung ist es bevorzugt, dass die anorganischen Partikel eine mittlere Teilchengröße zwischen 1 µm und 2 µm, die Partikel mit der Schichtgitterstruktur, insbesondere das hexagonale Bornitrid, eine mittlere Partikelgröße zwischen 0,1 µm und 5 µm, aufweisen. Die Partikelgrößen ändern sich in der Regel bei der Herstellung der erfindungsgemäßen Schicht gemäß dem vorliegend beschriebenen Verfahren nicht. Die Partikel mit der Schichtgitterstruktur, insbesondere das Bornitrid, und die anorganischen Partikel in der oben beschriebenen Zusammensetzung weisen entsprechend in bevorzugten Ausführungsformen die gleichen Partikelgrößen auf.

Weiterhin ist es bevorzugt, dass die erfindungsgemäße Schicht oder Beschichtung im Wesentlichen frei von organischen und/oder silikonbasierten Bestandteilen ist. Unter "im Wesentlichen frei von" soll dabei verstanden werden, dass der Anteil an organischen und/oder silikonbasierten Bestandteilen unterhalb 0,5 Gew.-% liegt, bevorzugt unterhalb 0,3 Gew.%, insbesondere unterhalb 0,1 Gew.-% (jeweils bezogen auf die Gesamtmasse der Schicht oder Beschichtung, insbesondere nach der Trocknung und der Wärmebehandlung nach einem erfindungsgemäßen Verfahren). Wie oben erwähnt, neigen Beschichtungen mit einem Anteil an organischem Kohlenstoff unter dem Einfluss extremer Hitze und UV-Strahlung zur Schwarzfärbung. Silikone enthalten stets organische Reste. Sie sind daher als Bindemittel für die erfindungsgemäße Schicht oder Beschichtung ebenso ungeeignet wie rein organische Binder, z.B. Acrylatbinder.

Bevorzugt ist die nach dem erfindungsgemäßen Verfahren herstellbare Schicht oder Beschichtung frei von Partikeln aus Titandioxid.

Als Füllstoffe kann die Schicht oder Beschichtung beispielsweise Zirkoniumdioxid, Ceroxid, Zinkoxid oder eine Mischung aus mindestens zwei dieser Verbindungen umfassen. Die Füllstoffe sind bevorzugt als Partikel mit einer mittleren Partikelgröße im Sub-Mikrometer-Bereich (< 1000 nm), besonders bevorzugt zwischen 1 nm und 100 nm, enthalten. Nanoskalige Teilchen lagern sich aufgrund ihrer hohen Oberflächenenergien häufig zusammen und bilden auf diese Weise Agglomerate, die eine größere Teilchengröße vortäuschen als das einzelne Teilchen tatsächlich besitzt. Dementsprechend beziehen sich die Größenangaben bei nanoskaligen Teilchen in der vorliegenden Anmeldung, soweit möglich, auf die mittlere Teilchengröße von isolierten Teilchen, welche in diesem Zusammenhang auch als "Primärpartikel" bezeichnet werden können.

Die Beschichtung zeichnet sich in bevorzugten Ausführungsformen auch dadurch aus, dass sie in einen Absorptionskoeffizienten α (Absorptivität) unter 0.5 aufweist, das heißt, sie sieht makroskopisch weiß bzw. leicht grau aus. Dieses Alpha bleibt unter Temperatur, UV-Strahlung und Hochvakuum weitestgehend erhalten.

Das Emissionsvermögen ε (Emissivität) liegt bevorzugt bei über 0.85 und verändert sich unter Temperatur, UV-Strahlung und Hochvakuum nicht.

Die Dicke der gebrauchsfertigen, erfindungsgemäßen Schicht oder Beschichtung auf dem Substrat liegt bevorzugt im Bereich zwischen 0,5 µm und 300 µm, besonders bevorzugt zwischen 10 µm und 50 µm. Eine Dicke dieser Größenordnung gewährleistet selbst unter den oben erwähnten Extrembedingungen eine lange Lebensdauer. Gleichzeitig weist eine Beschichtung mit diesen Dimensionen ein nur sehr geringes Eigengewicht auf. Je dünner die Schicht sein soll, desto feiner gemahlen müssen die verwendeten Partikel mit der Schichtgitterstruktur und/oder die anorganischen Partikel sein.

In besonders bevorzugten Ausführungsformen zeichnet sich eine erfindungsgemäße Schicht oder Beschichtung dadurch aus, dass sie eine Porosität von mindestens 10 %, besonders bevorzugt zwischen 10 % und 40 %, insbesondere zwischen 20 % und 35 %, aufweist. Die Porosität ist dabei definiert als Verhältnis von Hohlraumvolumen zu Gesamtvolumen der Schicht oder Beschichtung, wobei sich die angegebenen Werte auf die gebrauchsfertige Schicht oder Beschichtung auf dem Substrat beziehen. Die Bestimmung dieser Werte erfolgte röntgenanalytisch mittels eines Micro-CT-Scanners. Dabei werden dreidimensionale Darstellungen gebrauchsfertiger Proben der erfindungsgemäßen Schicht erzeugt, aus welchen sich dann das Hohlraumvolumen exakt berechnen lässt. Die Einstellung der Porosität in diesen Bereich ist für Fachmänner für keramische und glaskeramische Beschichtungen problemlos möglich. Die entscheidenden Parameter hierfür sind insbesondere die Auswahl eines geeigneten Binders, die Temperatur bei der Wärmebehandlung sowie Art und Größe sowohl der anorganischen als auch gegebenenfalls der Füllstoffpartikel sowie deren Mengenverhältnis zueinander.

Weiterhin weist die Schicht oder Beschichtung in bevorzugten Ausführungsformen ein Muster aus Punkten und/oder Linien aufweist, in denen die Substratoberfläche frei liegt oder in bzw. entlang denen die Dicke der Schicht reduziert ist gegenüber der mittleren Schichtdicke. Das Muster setzt sich bevorzugt aus regelmäßig angeordneten Punkten und/oder Linien zusammen. Beispielsweise können diese ein Gitter aus gleichmäßig voneinander beabstandeten, vertikal und horizontal ausgerichteten Linien ausbilden. Auf den Zweck dieser Punkte und/oder Linien sowie auf ihre Herstellung wurde bereits eingegangen.

Ein besonders hervorzuhebendes Merkmal der erfindungsgemäßen Schicht oder Beschichtung ist ihre hohe Temperaturwechselbeständigkeit, insbesondere in einem Bereich zwischen - 196 °C und 500 °C. Eine bei 500 °C in einem Ofen gelagerte Probe der Schicht konnte direkt in flüssigen Stickstoff überführt und belassen werden, ohne dass die Schicht Beschädigungen zeigte, auch nicht bei mehrfacher Wiederholung des Vorgangs. Insbesondere mit Schichten, welche die erwähnte bevorzugte Porosität aufwiesen, konnte dieser Test erfolgreich absolviert werden. Das zeigt, dass mit einer erfindungsgemäßen Schicht oder Beschichtung geschützte Substrate auftretende Temperaturgradienten von mehreren 100 K/min unbeschadet überstehen können. Verantwortlich hierfür sind vermutlich die in der Schicht enthaltenen Partikel mit der Schichtgitterstruktur, gegebenenfalls in Kombination mit der beschriebenen Porosität. Insbesondere zeichnet sich die erfindungsgemäße Schicht oder Beschichtung auch dadurch aus, dass ihr spezifischer Flächenwiderstand im Bereich zwischen 1 Ohm und 100 GigaOhm (Bulkwiderstand < 10⁸ Ohm·m) liegt.

Weiter zeichnet sich die erfindungsgemäße Schicht oder Beschichtung durch ihre thermooptischen Eigenschaften aus. Die Schicht oder Beschichtung weist einen sehr geringen Absorptionskoeffizienten α in Verbindung mit einem hohen Emissionsvermögen ε. Das Emissionsvermögen ε ist eine dimensionslose Größe und ein Maß für die Fähigkeit eines Materials, Energie zu absorbieren und diese wieder abzustrahlen. α ist ebenfalls dimensionslos und gibt den Anteil der Strahlungsenergie an, den ein Material aus der auftreffenden Strahlung aufnimmt. Das Verhältnis von α zu ε ist eine wichtige Eigenschaft für Beschichtungen, die im Bereich der Luft- und Raumfahrttechnik eingesetzt werden. Je kleiner dieses Verhältnis ist, desto kühler bleibt das darunterliegende Substrat. Die erfindungsgemäße Schicht oder Beschichtung weist unmittelbar nach der Herstellung vorzugsweise ein Verhältnis α/ε ≤ 0.4, besonders bevorzugt α/ε ≤ 0.3 auf. Auch nach mehreren tausend Stunden Exposition eines erfindungsgemäß beschichteten Substrats unter harter UV-Strahlung wurde noch immer ein hervorragendes Verhältnis α/ε ≤ 0.5 gemessen. Der α/ε -Wert erfindungsgemäßer Schichten oder Beschichtungen bleibt gegebenenfalls über Jahre nahezu konstant, auch unter hoher Belastung.

Allgemein gilt, dass je rauer die Oberfläche der erfindungsgemäßen Schicht oder Beschichtung ist, desto höher wird der Anteil an diffuser Reflexion. Die Rauheit der Schicht lässt sich gezielt schon während der Auftragung, beispielsweise durch Variation von Sprühdruck, -abstand und Verweilzeit auf dem Substrat, beeinflussen. Daneben kann sie auch durch eine mechanische Nachbearbeitung, wie z.B. Polieren, angepasst werden. Auch die Porosität der erfindungsgemäßen Schicht oder Beschichtung kann einen Einfluss auf die Rauheit ausüben. Folglich ist eine Anpassung der Rauheit auch durch die in Bezug auf die Porosität beschriebenen Parameter möglich.

Eine erfindungsgemäße Schicht oder Beschichtung weist bevorzugt eine mittlere Rauheit Rₐ zwischen 0,05 µm und 5 µm sowie eine gemittelte Rautiefe R_{z} zwischen 0,1 µm und 50 µm auf. Dabei gibt Rₐ den mittleren Abstand eines Messpunktes auf der Oberfläche zur Mittellinie an. Die Mittellinie schneidet innerhalb der Bezugsstrecke das wirkliche Profil so, dass die Summe der Profilabweichungen (bezogen auf die Mittellinie) minimal wird. R_{z} ist der Mittelwert aus den gemessenen 5 maximalen Profilhöhen, wobei die Profilhöhe der größte senkrechte Abstand der obersten Erhebung von der tiefsten Vertiefung innerhalb der gemessenen Bezugsstrecke ist.

In besonders bevorzugten Ausführungsformen kann die erfindungsgemäße Schicht oder Beschichtung mit einer Versiegelungsschicht abgedeckt sein, insbesondere aus einem der oben beschriebenen Wassergläsern. Diese kann dazu dienen, die Poren in der Schicht nach außen hin zu verschließen bzw. die Rauhigkeit zu erniedrigen.

Die erfindungsgemäße Schicht oder Beschichtung zeigt sehr gute Hafteigenschaften, insbesondere auf den erwähnten Oberflächen von Substraten aus Aluminium oder einer hochtemperaturfesten Aluminiumlegierung, Titan oder einer hochtemperaturfesten Titanlegierung oder aus einem faserverstärkten Werkstoff. Bei einem Tape-Test mit einer Abschälstärke (peel strength) von 220 g/cm konnte keine Ablösung der Beschichtung vom Substrat beobachtet werden.

Weiterhin ist auch die hohe Vakuumstabilität hervorzuheben, die eine erfindungsgemäße Schicht oder Beschichtung in der Regel aufweist. In diesem Zusammenhang ist hervorzuhaben, dass die erfindungsgemäße Schicht oder Beschichtung in der Regel bei reduziertem Druck bzw. im Vakuum nicht ausgast.

Auch die im oben beschriebenen Verfahren verwendete Beschichtungszusammensetzung ist Gegenstand der vorliegenden Erfindung. Sie umfasst Partikel mit der Schichtgitterstruktur, insbesondere hexagonales Bornitrid, die beschriebenen elektrisch leitenden und nicht leitenden anorganischen Partikel, einen anorganischen Binder sowie üblicherweise auch ein Lösungs- und/oder Dispergiermittel. Alle Komponenten sowie die Zusammensetzung selbst wurden oben bereits beschrieben, auf die entsprechenden Ausführungen wird hiermit Bezug genommen.

Auch die beschriebenen Füllstoffe können in der Zusammensetzung enthalten sein.

Die vorliegende Erfindung umfasst weiterhin jedes Substrat bzw. jeden Gegenstand, insbesondere im Bereich der Luft- und Raumfahrttechnik, der mit einer erfindungsgemäßen Schicht versehen, insbesondere beschichtet, ist. Dabei ist es unerheblich, ob der Gegenstand nur teilweise oder vollständig mit der erfindungsgemäßen Schicht beschichtet ist.

Weitere Merkmale der Erfindung ergeben sich aus der nachfolgenden Beschreibung einer bevorzugten Ausführungsform in Verbindung mit den Unteransprüchen. Hierbei können die einzelnen Merkmale jeweils für sich oder zu mehreren in Kombination miteinander bei einer Ausführungsform der Erfindung verwirklicht sein. Die beschriebene besondere Ausführungsform dient lediglich der Erläuterung und zum besseren Verständnis der Erfindung und ist in keiner Weise einschränkend zu verstehen.

### Beispiel

### (1) Herstellung einer zur Herstellung einer erfindungsgemäßen Schicht oder Beschichtung geeigneten Zusammensetzung

100g eines mit ATO gecoateten TiO₂ Pulvers (Hersteller: Milliken Chemicals) werden bei 500 °C für eine Stunde an der Luft getempert um möglicherweise enthaltene Kohlenstoffreste zu entfernen. Anschließend wird das Pulver in einem Schutzgasofen für 8h unter Formiergas (5% Wasserstoffanteil) aktiviert um Sauerstofffehlstellen zu schaffen. Dieses vorbehandelte Pulver wird als leitfähiges Basismaterial eingesetzt.

Ca. 30 Gewichtsteile einer wässrigen Suspension eines Weißpigments (50 Gew.-% Al₂O₃ in Wasser, Partikelgröße 1,5 - 2,0 µm) werden zusammen mit ca. 20 Gewichtsteilen demineralisiertem Wasser vorgelegt und bei Raumtemperatur (RT) für 5 min gerührt. Danach erfolgt bei RT die Zugabe von ca. 20 Gewichtsteilen eines Kaliumwasserglases (Modul 2,5; 28 %-ige wässrige Lösung). Nach 10 min Rühren bei RT werden 20 Gewichtsteile des gemäß obiger Vorschrift aktivierten TiO₂/ATO Pulver hinzugegeben und ca. 30 Minuten gerührt. Anschließend erfolgt die Zugabe von Partikeln aus hexagonalem Bornitrid Es wird so lange gerührt, bis eine homogene Mischung entsteht.

### (2) Applikation einer zur Herstellung einer erfindungsgemäßen Schicht oder Beschichtung geeigneten Zusammensetzung auf ein zu schützendes Substrat.

Die zu schützenden metallischen Substrate werden ohne Anrauhen verwendet. Zur Entfernung von Schmutz- und Fettresten werden die Substrate in einer tensidischen Lösung bei RT oder 40 °C (eventuell unter Zusatz von Ultraschall) für einige Minuten belassen und nach dem Abspülen der Lösung mehrere Male in Bädern mit demineralisiertem Wasser bei RT oder 40 °C für einige Minuten (eventuell unter Zusatz von Ultraschall) eingelagert. Nach dem Trocknen werden die Substrate mit einem Haftvermittler, bestehend aus einer 14 %-igen Kaliumwasserglaslösung (Modul 2,5), beschichtet.

Die gemäß (1) hergestellte Zusammensetzung wird vor der Auftragung nochmals aufgerührt, gesiebt und in mehreren Beschichtungszyklen mittels einer HVLP-Spritzpistole aufgesprüht (direkter Nassauftrag). Nach jedem Zyklus folgt ein Trocknungsschritt bei 50 °C mit anschließender Schichtdickebestimmung. Die so gebildete Beschichtung kann ohne weiteren Sinterschritt verwendet werden.

## Patentansprüche

1. Verfahren zum Schützen eines bevorzugt metallischen Substrats vor Beschädigung durch elektrische Aufladung und elektromagnetische Strahlung und/oder Partikelbeschuss, insbesondere eines Bauteils aus der Luft- und Raumfahrttechnik, bei dem eine Zusammensetzung umfassend
• zwischen 1 und 10 Gew.-%, bevorzugt zwischen 4 und 7 Gew.-%, Partikel mit Schichtgitterstruktur, insbesondere hexagonales Bornitrid,
• zwischen 10 und 90 Gew.-%, bevorzugt zwischen 20 und 50 Gew.-%, anorganische Partikel aus einem transparenten oder weißen, elektrisch leitfähigen Oxid (TCO) aus der Gruppe mit Indiumzinnoxid (ITO), Aluminium-Zink-Oxid (AZO), und Antimon-Zinn-Oxid (ATO),
• zwischen 10 und 60 Gew.-%, bevorzugt zwischen 30 und 45 Gew.-%, anorganische Partikel aus einem transparenten oder weißen, elektrisch nicht leitfähigen Oxid,
• zwischen 5 und 45 Gew.-%, bevorzugt zwischen 15 und 35 Gew.-%, eines Glasbildners als anorganischen Binder sowie
• Wasser als Lösungs- bzw. Dispergiermittel
als Schicht auf das Substrat aufgebracht und getrocknet wird, wobei die anorganischen Partikel aus dem elektrisch leitfähigen Oxid zwecks Verbesserung ihrer Leitfähigkeit einer aktivierenden Vorbehandlung unterzogen werden, bevor sie in die Zusammensetzung eingebracht werden, wobei die Vorbehandlung die folgenden Maßnahmen umfasst:
• Mahlen der Partikel zur Verringerung der Korngröße,
• Tempern der Partikel an Luft zur Entfernung von eventuellen kohlenstoffhaltigen Verunreinigungen, und
• Tempern im Vakuum und/oderTempern unter Wasserstoff und/oder unter Formiergas zur Erzeugung von Sauerstofffehlstellen.

2. Verfahren nach Anspruch 1, **dadurch gekennzeichnet, dass** sich an die Trocknung eine Wärmebehandlung bei einer Temperatur zwischen 50°C und 600°C anschließt oder die Trocknung im Rahmen einer solchen Wärmebehandlung erfolgt.

3. Verfahren nach einem der Ansprüche 1 oder 2, **dadurch gekennzeichnet, dass** als anorganische Partikel mindestens eine Komponente aus der Gruppe mit Aluminiumoxid, insbesondere Korund, Aluminiumtitanat und Zirkoniumdioxid enthalten ist.

4. Verfahren nach einem der vorangegangenen Ansprüche, **dadurch gekennzeichnet, dass** die Zusammensetzung des anorganischen Binders ein Wasserglas oder ein Phospatglas umfasst.

5. Verfahren nach einem der vorangegangenen Ansprüche, **dadurch gekennzeichnet, dass** die Schicht auf dem Substrat einem Strukturierungsprozess unterzogen wird.

6. Schicht oder Beschichtung auf einem Substrat, **dadurch gekennzeichnet, dass** sie eine glasartige Matrix aufweist, in welche
• Partikel mit Schichtgitterstruktur, insbesondere hexagonales Bornitrid,
• anorganische Partikel aus einem transparenten oder weißen, elektrisch leitfähigen Oxid (TCO) aus der Gruppe mit Indiumzinnoxid (ITO), Aluminium-Zink-Oxid (AZO), und Antimon-Zinn-Oxid (ATO), sowie
• anorganische Partikel aus einem transparenten oder weißen, elektrisch nicht leitfähigen Oxid,
eingelagert sind, wobei
• die Partikel mit Schichtgitterstruktur in der Schicht in einem Anteil zwischen 5 und 20 Gew.-%, bevorzugt zwischen 8 und 15 Gew.-%,
• das TCO in der Schicht in einem Anteil zwischen 10 und 90 Gew.-%, bevorzugt zwischen 20 und 60 Gew.-%, insbesondere von ca. 30 Gew.-%, und
• die anorganischen Partikel aus dem transparenten oder weißen, elektrisch nicht leitfähigen Oxid in der Schicht in einem Anteil zwischen 10 und 60 Gew.-%, bevorzugt zwischen 20 und 40 Gew.-%, insbesondere von ca. 30 Gew.-%,
enthalten sind und die anorganischen Partikel aus dem transparenten oder weißen, elektrisch nicht leitfähigen Oxid Sauerstofffehlstellen aufweisen, die durch eine aktivierende Vorbehandlung umfassend die Maßnahmen
• Mahlen der Partikel zur Verringerung der Korngröße,
• Tempern der Partikel an Luft zur Entfernung von eventuellen kohlenstoffhaltigen Verunreinigungen, und
• Tempern der Partikel im Vakuum und/oderTempern unter Wasserstoff und/oder unter Formiergas zur Erzeugung der Sauerstofffehlstellen.
erzeugt wurden.

7. Schicht oder Beschichtung nach Anspruch 6, **dadurch gekennzeichnet, dass** sie frei von organischen und/oder silikonbasierten Bestandteilen ist.

8. Schicht oder Beschichtung nach einem der Ansprüche 6 oder 7, **dadurch gekennzeichnet, dass** sie eine Porosität von mindestens 10 % aufweist, bevorzugt zwischen 10 % und 70 %, insbesondere zwischen 30 % und 45 %.

9. Schicht oder Beschichtung nach einem der Ansprüche 6 bis 8, **dadurch gekennzeichnet, dass** sie ein Muster aus Punkten und/oder Linien aufweist, in denen die Substratoberfläche frei liegt oder in bzw. entlang denen die Dicke der Schicht reduziert ist gegenüber der mittleren Schichtdicke.

10. Substrate, bevorzugt aus der Luft- und Raumfahrttechnik, insbesondere Teile von Raumflugkörpern wie Sonden- und Satellitenteile, mindestens teilweise beschichtet mit einer Schicht oder Beschichtung gemäß den Ansprüchen 6 bis 9, hergestellt oder herstellbar gemäß einem Verfahren nach einem der Ansprüche 1 bis 5.

## Claims

1. Method of protecting a preferably metallic substrate from damage by electrical charge and electromagnetic radiation and/or particle bombardment, especially of a component from aerospace technology, in which a composition comprising
• between 1% and 10% by weight, preferably between 4% and 7% by weight, of particles having a layer lattice structure, especially hexagonal boron nitride,
• between 10% and 90% by weight, preferably between 20% and 50% by weight, of inorganic particles composed of a transparent or white, electrically conductive oxide (TCO) from the group comprising indium tin oxide (ITO), aluminium zinc oxide (AZO), and antimony tin oxide (ATO),
• between 10% and 60% by weight, preferably between 30% and 45% by weight, of inorganic particles composed of a transparent or white, electrically nonconductive oxide,
• between 5% and 45% by weight, preferably between 15% and 35% by weight, of a glass former as inorganic binder and
• water as solvent/dispersant
is applied as a layer to the substrate and dried, wherein the inorganic particles of the electrically conductive oxide, for the purpose of improving their conductivity, are subjected to an activating pretreatment before they are introduced into the composition, wherein the pretreatment comprises the following measures:
• grinding the particles to reduce the particle size,
• heating the particles under air to remove any carbonaceous impurities, and
• heating under reduced pressure and/or heating under hydrogen and/or under forming gas to produce oxygen defect sites.

2. Method according to Claim 1, **characterized in that** the drying is followed by a heat treatment at a temperature between 50°C and 600°C or the drying is effected in the course of such a heat treatment.

3. Method according to either of Claims 1 and 2, **characterized in that** the inorganic particles present at least one component from the group comprising aluminium oxide, especially corundum, aluminium titanate and zirconium dioxide.

4. Method according to any of the preceding claims, **characterized in that** the composition of the inorganic binder comprises a waterglass or a phosphate glass.

5. Method according to any of the preceding claims, **characterized in that** the layer on the substrate is subjected to a structuring process.

6. Layer or coating on a substrate, **characterized in that** it has a vitreous matrix with
• particles having a layer lattice structure, especially hexagonal boron nitride,
• inorganic particles composed of a transparent or white, electrically conductive oxide (TCO) from the group comprising indium tin oxide (ITO), aluminium zinc oxide (AZO), and antimony tin oxide (ATO), and
• inorganic particles composed of a transparent or white, electrically nonconductive oxide,
intercalated therein, wherein
• the particles having a layer lattice structure are present in the layer in a proportion between 5% and 20% by weight, preferably between 8% and 15% by weight,
• the TCO is present in the layer in a proportion between 10% to 90% by weight, preferably between 20% and 60% by weight, especially of about 30% by weight, and
• the inorganic particles composed of the transparent or white, electrically nonconductive oxide are present in the layer in a proportion between 10% and 60% by weight, preferably between 20% and 40% by weight, especially of about 30% by weight,
and the inorganic particles composed of the transparent or white, electrically nonconductive oxide have oxygen defect sites which have been produced by an activating pretreatment comprising the measures of
• grinding the particles to reduce the particle size,
• heating the particles under air to remove any carbonaceous impurities, and
• heating under reduced pressure and/or heating under hydrogen and/or under forming gas to produce oxygen defect sites.

7. Layer or coating according to Claim 6, **characterized in that** it is free of organic and/or silicone-based constituents.

8. Layer or coating according to either of Claims 6 and 7, **characterized in that** it has a porosity of at least 10%, preferably between 10% and 70%, especially between 30% and 45%.

9. Layer or coating according to any of Claims 6 to 8, **characterized in that** it has a pattern of dots and/or lines in which the substrate surface is exposed or in or along which the thickness of the layer is reduced compared to the mean layer thickness.

10. Substrates, preferably from aerospace technology, especially parts of spacecraft such as probe and satellite parts, at least partly coated with a layer or coating according to Claims 6 to 9, produced or producible by a method according to any of Claims 1 to 5.

## Revendications

1. Procédé de protection d'un substrat préférentiellement métallique contre les charges électriques et les rayonnements électromagnétiques et/ou le bombardement particulaire, en particulier d'une pièce pour la construction aérospatiale, dans lequel on applique et on fait sécher une composition contenant :
• entre 1 et 10 % en poids, de préférence entre 4 et 7 % en poids, de particules avec une structure lamellaire, en particulier de nitrure de bore hexagonal,
• entre 10 et 90 % en poids, de préférence entre 20 et 50 % en poids, de particules minérales d'un oxyde (TCO) transparent ou blanc, conducteur électrique, constituées d'un membre du groupe avec de l'oxyde d'indium et d'étain (ITO), de l'oxyde d'aluminium et de zinc (AZO) et de l'oxyde d'antimoine et d'étain (ATO),
• entre 10 et 60 % en poids, de préférence entre 30 et 45 % en poids, de particules minérales d'un oxyde transparent ou blanc, non-conducteur électrique,
• entre 5 et 45 % en poids, de préférence entre 15 et 35 % en poids, d'un composant de verre utilisé comme liant minéral, ainsi que
• de l'eau comme solvant ou resp. comme agent dispersant,
les particules minérales d'oxyde conducteur étant soumises à un traitement préalable d'activation pour améliorer leur conductivité, avant leur introduction dans la composition, le traitement préalable comprenant les mesures suivantes :
• broyage des particules pour réduire leur granulométrie,
• recuit des particules à l'air pour éliminer d'éventuelles impuretés carbonées, et
• recuit sous vide et/ou recuit sous hydrogène et/ou sous gaz de formage pour produire des sites en défaut d'oxygène.

2. Procédé selon la revendication 1, **caractérisé en ce qu'**un traitement thermique à une température entre 50°C et 600°C suit le séchage ou **en ce que** le séchage α lieu dans le cadre d'un tel traitement thermique.

3. Procédé selon la revendication 1 ou 2, **caractérisé en ce qu'**est contenu comme particules minérales au moins un composant du groupe avec de l'oxyde d'aluminium, en particulier du corindon, du titanate d'aluminium et du dioxyde de zirconium.

4. Procédé selon une des revendications précédentes, **caractérisé en ce que** la composition du liant minéral comprend un verre à eau ou un verre de phosphate.

5. Procédé selon une des revendications précédentes, **caractérisé en ce que** la couche sur le substrat est soumise à un procédé de structuration.

6. Couche ou revêtement sur un substrat, **caractérisé en ce qu'**il ou elle présente une matrice vitreuse, dans laquelle sont emmagasinés :
• des particules avec une structure lamellaire, en particulier du nitrure de bore hexagonal,
• des particules minérales d'un oxyde (TCO) transparent ou blanc, conducteur électrique, constituées d'un membre du groupe avec de l'oxyde d'indium et d'étain (ITO), de l'oxyde d'aluminium et de zinc (AZO) et de l'oxyde d'antimoine et d'étain (ATO), ainsi que
• de particules minérales d'un oxyde transparent ou blanc, non-conducteur électrique,
où
• les particules avec une structure lamellaire sont contenues dans la couche à hauteur d'entre 5 et 20 % en poids, de préférence entre 8 et 15 % en poids,
• le TCO est contenu dans la couche à hauteur d'entre 10 et 90 % en poids, de préférence entre 20 et 60 % en poids, en particulier environ 30 % en poids, et
• les particules minérales d'un oxyde transparent ou blanc, non-conducteur électrique, sont contenues dans la couche à hauteur d'entre 10 et 60 % en poids, de préférence entre 20 et 40 % en poids, en particulier environ 30 % en poids,
et les particules minérales d'un oxyde transparent ou blanc, non-conducteur électrique présentent des sites en défaut d'oxygène produits par un traitement préalable d'activation comprenant les étapes de :
• broyage des particules pour réduire leur granulométrie,
• recuit des particules à l'air pour éliminer d'éventuelles impuretés carbonées, et
• recuit sous vide et/ou recuit sous hydrogène et/ou sous gaz de formage pour produire les sites en défaut d'oxygène.

7. Couche ou revêtement selon la revendication 6, **caractérisé en ce qu'**il ou elle est exempt de composant organique et/ou à base de silicium.

8. Couche ou revêtement selon la revendication 6 ou 7, **caractérisé en ce qu'**il ou elle présente une porosité d'au moins 10%, de préférence entre 10 et 70 %, en particulier entre 30 et 45 %.

9. Couche ou revêtement selon une des revendication 6 à 8, **caractérisé en ce qu'** il ou elle présente un motif de points et/ou de lignes dans lequel la surface du substrat est dégagée ou resp. dans lequel l'épaisseur de la couche est réduite par rapport à l'épaisseur moyenne de la couche.

10. Substrats, de préférence issus de la construction aérospatiale, en particulier pièces de véhicule spatial, comme des pièces de sondes et de satellites, au moins partiellement recouverts d'une couche ou d'un revêtement selon les revendications 6 à 9, fabriqué ou confectionnable selon un procédé selon une des revendications 1 à 5.
